# EUROPEAN PATENT APPLICATION

(11) **EP 1 316 379 A1**
(43) Date of publication of application: **04.06.2003**
(21) Application number: 01310041.7
(22) Date of filing: 30.11.2001
(51) Int. Cl.: B23D 61/02

(54) **Rotary cutting blade**

(71) Applicant: Turbolite AG, 4246 Wahlen (CH)
(72) Inventor: Halbeisen, Mario, 6052 Hergiswil (CH)
(74) Representative: Loven, Keith James

(57) **Abstract**

A rotary cutting blade for a power tool comprises a disc (2) having a plurality of cutting elements (6) arranged around the circumference thereof, characterised in that the disc (2) has a region of relatively smaller thickness adjacent to the circumference thereof, and a region of relatively greater thickness (3) radially inward thereof.

## Description

### Field of the Invention

This invention relates to a rotary cutting tool, and particularly, but not exclusively, to a cutting tool for cutting masonry and the like.

### Background to the Invention

With rotary cutting blades, and in particular diamond cutting blades, the cutting speed is greatly dependent on the cutting width; the thinner the cutting blade, the faster it can cut through material. For example, while a 5mm thick diamond cutting blade may take 10 minutes to cut a 1m long slot in masonry, a 2.5mm thick blade will cut the same length of slot in only 5 minutes, while a 1.25mm thick blade will take 3 minutes. There are, however, limits as to how thin a blade can be, because it has to retain its structural integrity - it has to be capable of withstanding the side pressure and centrifugal forces generated in use. For this reason, the thickness of the blade, and hence its cutting width, has to be a compromise with the requirements of structural integrity, stability and safety.

An ideal combination of these criteria could be achieved by making the cutting area of the blade disc as thin as possible, while making the central region of the blade which carries the main structural loads as thick as possible.

A further problem, particularly with diamond cutting blades, which typically have cutting elements formed of diamond grit supported in a matrix of soft metal or the like, is that the grit is arranged so as to have maximum cutting effect when the blade is rotated in one particular direction. Rotation in the wrong direction reduces cutting and increases friction, giving rise to additional heat generation. Transfer of this heat to the steel core of the disc can give rise to stress cracking of the core. Using blades in the wrong direction can thus reduce performance and blade life, and can cause a safety hazard. For these reasons, the correct direction of rotation is marked on the blade by an arrow, typically printed on to the blade or a blade label. Since the sides of the blade can rub against the materials being cut, in use, the arrow can be worn away, so that the risk of incorrect installation of a part-used blade is high. While cutting the arrow into the blade disc may ensure that it remains visible during the life of the blade, this tends to weaken the disc, with a risk of causing hairline fractures of the disc, in use, possibly leading to failure of the blade, with consequent risk to the safety of the operator of the cutting tool.

### Summary of the Invention

According to the invention, there is provided a rotary cutting blade for a power tool, comprising a disc having a plurality of cutting elements arranged around the circumference thereof, the disc having a region of relatively smaller thickness adjacent to the circumference thereof, and a region of relatively greater thickness radially inward thereof.

The disc is typically formed of steel, and preferably the region of relatively greater thickness comprises a steel reinforcing member attached to the face of the disc on at least one side thereof, and more preferably to both sides thereof. The reinforcing member may be attached by riveting, by welding, including spot-welding, or by means of adhesive. Alternatively, it may be formed by sintering a body of material on to the or each face of the disc. It will be appreciated that the invention is not limited to steel discs or to the use of steel for the reinforcing members.

The region of relatively greater thickness, for example the reinforcing member, or at least one of the reinforcing members, preferably has at least one indicium recessed into or embossed on the surface thereof. The indicium may be an arrow indicating the correct direction of rotation of the blade, in use. Other indicia may also be formed in or on the surface of the reinforcing member or members, such as identifying or branding indicia. The recessed indicia may be formed by cutting or stamping, for example. Since the indicia are formed on or in the reinforcing member which, being of greater thickness than the outer cutting region, does not enter into the groove being cut and is therefore not subject to side wear, the indicia remain visible even after prolonged use of the blade. The blades can achieve fine cutting, and therefore a greater linear cutting speed, while being of greater strength and durability than a conventional blade of the same cutting width.

While reference has been made to attaching reinforcing members to the face of a relatively thin disc, it will be understood that the disc could alternatively be formed from a thin cylindrical body from which material is removed, for example by machining, around the periphery thereof.

### Brief Description of the Drawings

In the drawings, which illustrate exemplary embodiments of the invention:
Figure 1 is a perspective view of a rotary cutting blade according to one embodiment of the invention;
Figure 2 is a vertical sectional view through the blade of Figure 1; and
Figure 3 is a vertical sectional view corresponding to that of Figure 2, showing an alternative embodiment of the cutting blade of the invention in use in cutting a groove in a body.

### Detailed Description of the Illustrated Embodiments

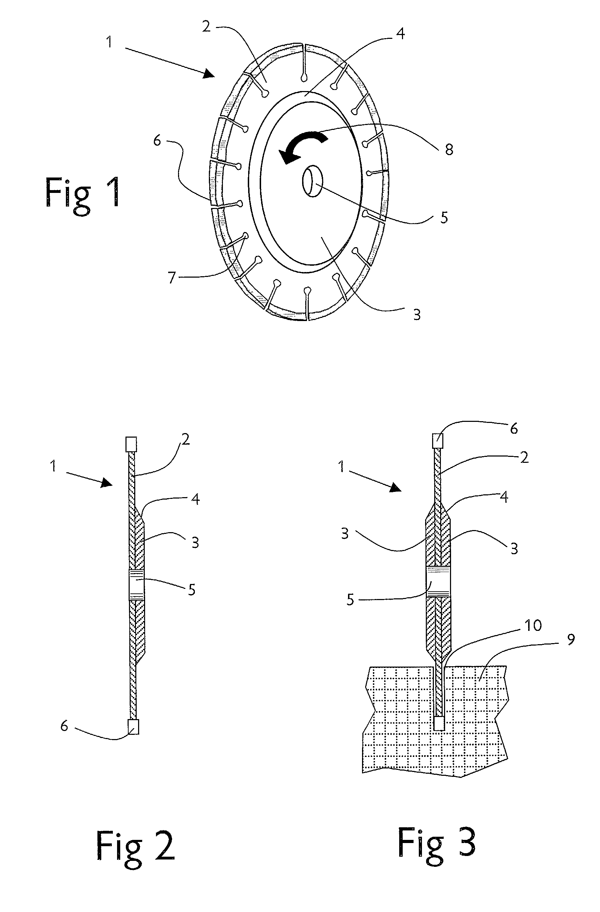

Referring first to Figures 1 and 2, the cutting blade 1 comprises a relatively thin planar support disc 2 of steel, having secured on one face thereof, for example by spot-welding, a reinforcing disc 3, also of steel, with a chamfered outer edge 4, a mounting hole 5 being provided through the disc in the centre thereof for attaching the blade to the power tool. Cutting elements 6 are spaced around the circumference of the disc 2, which is provided with radially extending slots 7 in conventional manner to assist in dust clearance and to facilitate cooling. The elements 6 comprise a soft metal matrix carrying natural and /or synthetic diamond particles. The constitution of such cutting elements is well-known in the art and will not be described here in detail, but it will be appreciated that various different types of cutting elements may be employed in the cutting blade of the invention. The shapes and numbers of the cutting elements may be varied as desired; for example, they may be in the form of longer, curved segments and relatively few in number, or a greater number of shorter elements may be used. It is possible to provide a continuous rim of the cutting material around the circumference of the disc.

An arrow symbol 8 is cut into the side of the reinforcing disc 3 to indicate the correct direction of rotation of the disc in use. To increase visibility of the arrow, the recessed shape may be filled with paint or the like.

The blade shown in Figure 3 has a reinforcing disc 3 attached to each of the opposed faces of the disc 2, for greater strength and rigidity. It will be seen that, as the disc cuts into a substrate 9, for example concrete, the depth of the groove 10 which can be formed therein is limited by the reinforcements, which cause the blade to have a greater thickness in that region than the width of the groove. Since the reinforcements thus do not come into contact with the sides of the groove 10, they do not suffer abrasion, and so the arrow symbol, and any other indicia thereon, do not become worn away, and remain visible throughout the life of the blade.

## Claims

1. A rotary cutting blade for a power tool, comprising a disc (2) having a plurality of cutting elements (6) arranged around the circumference thereof, **characterised in that** the disc (2) has a region of relatively smaller thickness adjacent to the circumference thereof, and a region of relatively greater thickness (3) radially inward thereof.

2. A blade according to Claim 1, wherein the region of relatively greater thickness (3) comprises a reinforcing member attached to the face of the disc on at least one side thereof.

3. A blade according to Claim 2, wherein the region of relatively greater thickness comprises a reinforcing member attached to opposed faces of the disc.

4. A blade according to Claim 2 or 3, wherein the or each reinforcing member is attached to the disc by means of welding or soldering.

5. A blade according to Claim 2 or 3, wherein the or each reinforcing member is attached to the disc by means of riveting or adhesive.

6. A blade according to Claim 1, wherein the region of relatively greater thickness comprises a reinforcing member sintered on to at least one face of the disc.

7. A blade according to any of Claims 2 to 6, wherein the reinforcing member, or at least one of the reinforcing members, has at least one indicium (8) recessed into or embossed on the surface thereof.

8. A blade according to Claim 7, wherein the indicium (8) is an arrow indicating the correct direction of rotation of the blade, in use.
